# EUROPEAN PATENT APPLICATION

(11) **EP 4 325 354 A1**
(43) Date of publication of application: **21.02.2024**
(21) Application number: 21938417.9
(22) Date of filing: 29.04.2021
(51) Int. Cl.: G06F 9/445

(54) **SOFTWARE UPGRADE METHOD AND RELATED PRODUCT**

(71) Applicant: Huawei Technologies Co., Ltd., Longgang Shenzhen, Guangdong 518129 (CN)
(72) Inventor: PENG, Jianfen, Shenzhen, Guangdong 518129 (CN); WANG, Yong, Shenzhen, Guangdong 518129 (CN)
(74) Representative: Thun, Clemens
(86) International application number: PCT/CN2021/091174
(87) International publication number: WO 2022/226938

(57) **Abstract**

Embodiments of this application disclose an upgrade method and a related product, and relate to the field of software upgrade, and specifically, to the field of intelligent vehicle. The method includes: obtaining a target upgrade package; and when a preset condition is met, upgrading target software by using the target upgrade package, where the preset condition is used to verify security of upgrading the target software by using the target upgrade package. In embodiments of this application, when the preset condition is met, the target software is upgraded by using the target upgrade package, so that the security of upgrading the target software by using the target upgrade package can be ensured, and occurrence of an upgrade exception can be reduced.

## Description

### TECHNICAL FIELD

This application relates to the field of software upgrade, and in particular, to a software upgrade method and a related product.

### BACKGROUND

An over the air (over the air, OTA) technology is a technology for downloading data through a wireless network. The OTA technology has been widely used to implement upgrade of devices such as a smart television, a mobile phone, a tablet computer, and a set top box. With development of intelligent connected vehicles, an OTA online upgrade function (a function of upgrading software or firmware through the OTA technology) becomes an important function of a vehicle. An original equipment manufacturer (original equipment manufacturer, OEM) uses the OTA online upgrade function to upgrade related software or firmware of the vehicle, which helps reduce recall costs, quickly respond to a requirement, and improve user experience.

In actual application, an upgrade exception may occur when the related software or firmware of the vehicle is upgraded through the OTA online upgrade function. How to reduce a case in which an upgrade exception occurs in software (or firmware) is a problem that needs to be resolved currently.

### SUMMARY

Embodiments of this application provide a software upgrade method and a related product. Before an upgrade package is installed, the upgrade package is verified, and an upgrade package that passes verification is installed and activated, so that an upgrade exception can be avoided.

According to a first aspect, an embodiment of this application provides a software upgrade method. The method includes: obtaining a target upgrade package; and when a preset condition is met, upgrading target software by using the target upgrade package, where the preset condition is used to verify security of upgrading the target software by using the target upgrade package.

The preset condition may be understood as a condition for ensuring security of upgrading the target software by using the target upgrade package, namely, a condition for ensuring that an upgrade exception does not occur when the target software is upgraded by using the target upgrade package. In other words, if the target upgrade package does not meet the preset condition, an upgrade exception may occur when the target software is upgraded by using the target upgrade package. If the target upgrade package meets the preset condition, an upgrade exception basically does not occur when the target software is upgraded by using the target upgrade package.

In this embodiment of this application, when the preset condition is met, the target software is upgraded by using the target upgrade package, so that security of upgrading the target software by using the target upgrade package can be ensured, and occurrence of an upgrade exception can be reduced.

In a possible implementation, the preset condition includes one or two of the following: attribute information of the target upgrade package matches attribute information of the target upgrade package included in an upgrade package description file, and a version number of the target upgrade package matches a file included in the target upgrade package.

In this implementation, the attribute information of the target upgrade package matches the attribute information of the target upgrade package included in the upgrade package description file, so that it can be ensured that content of the target upgrade package is consistent with a version of the target upgrade package. The version number of the target upgrade package matches the file included in the target upgrade package, so that it can also be ensured that the content of the target upgrade package is consistent with the version of the target upgrade package. Whether the content of the target upgrade package is consistent with the version of the target upgrade package can be quickly and accurately verified through the preset condition.

In a possible implementation, that the version number of the target upgrade package matches the file included in the target upgrade package includes: A version number of the target software to the version number of the target upgrade package correspond to a major version upgrade, and the target upgrade package includes a file required for implementing the major version upgrade of the target software. Alternatively, that the version number of the target upgrade package matches the file included in the target upgrade package includes: Aversion number of the target software to the version number of the target upgrade package correspond to a minor version upgrade, and the target upgrade package does not include a file required for implementing the major version upgrade of the target software.

In this implementation, when the version number of the target software to the version number of the target upgrade package correspond to the major version upgrade, and the target upgrade package includes the file required for implementing the major version upgrade of the target software, it indicates that the version number of the target upgrade package matches the file included in the target upgrade package. When the version number of the target software to the version number of the target upgrade package correspond to the minor version upgrade, and the target upgrade package does not include the file required for implementing the major version upgrade of the target software, it indicates that the version number of the target upgrade package matches the file included in the target upgrade package. In this implementation, whether the version number of the target upgrade package matches the file included in the target upgrade package can be accurately and quickly verified.

In a possible implementation, the preset condition further includes: The version number of the target upgrade package is greater than the version number of the target software, or the version number of the target upgrade package is smaller than the version number of the target software and the version number of the target upgrade package is a version number authorized by a user to install.

In this implementation, the version number of the target upgrade package is greater than the version number of the target software, so that it can be avoided that the target upgrade package is replaced, after being downloaded and stored locally but before being installed, with an upgrade package of an earlier version. The version number of the target upgrade package is smaller than the version number of the target software, and the version number of the target upgrade package is the version number authorized by the user to install, so that a requirement of the user for installing the upgrade package of the earlier version can be met.

In a possible implementation, the attribute information of the target upgrade package includes one or more of the following: a size of the target upgrade package, a quantity of files in the target upgrade package, and a hash value, where the hash value is obtained from the target upgrade package.

In this implementation, the attribute information of the target upgrade package includes one or more of the size of the target upgrade package, the quantity of files in the target upgrade package, and the hash value, to quickly and accurately verify whether the attribute information of the target upgrade package matches the attribute information of the target upgrade package included in the upgrade package description file.

In a possible implementation, before the upgrading target software by using the target upgrade package, the method further includes: obtaining the upgrade package description file, and performing integrity verification on the upgrade package description file. The preset condition includes: The upgrade package description file passes integrity verification, and the attribute information of the target upgrade package matches the attribute information of the target upgrade package included in the upgrade package description file.

In this implementation, integrity verification is performed on the upgrade package description file, so that integrity of the upgrade package description file is verified.

In a possible implementation, before the upgrading target software by using the target upgrade package, the method further includes: querying whether the version of the target upgrade package is a latest version; and when the version of the target upgrade package is the latest version, performing an operation of upgrading the target software by using the target upgrade package when the preset condition is met.

In this implementation, when the version of the target upgrade package is the latest version, the operation of upgrading the target software by using the target upgrade package when the preset condition is met is performed, to upgrade the target software by using the upgrade package of the latest version.

In a possible implementation, the target software is an electronic map, a target file is a non-dynamic library file, the major version upgrade is an update of a binding map version, the minor version upgrade is an update of a non-binding map version, or the major version upgrade is an update of a base map, and the minor version upgrade is an update of a non-base map.

According to a second aspect, an embodiment of this application provides a software upgrade apparatus, including: an obtaining unit, configured to obtain a target upgrade package; and a processing unit, configured to: when a preset condition is met, upgrade target software by using the target upgrade package, where the preset condition is used to verify security of upgrading the target software by using the target upgrade package.

In this embodiment of this application, when the preset condition is met, the processing unit upgrades the target software by using the target upgrade package, so that security of upgrading the target software by using the target upgrade package can be ensured, that is, it can be ensured that an upgrade exception does not occur when the target software is upgraded by using the target upgrade package.

In a possible implementation, the preset condition includes one or two of the following: attribute information of the target upgrade package matches attribute information of the target upgrade package included in an upgrade package description file, and a version number of the target upgrade package matches a file included in the target upgrade package.

In a possible implementation, that the version number of the target upgrade package matches the file included in the target upgrade package includes: A version number of the target software to the version number of the target upgrade package correspond to a major version upgrade, and the target upgrade package includes a file required for implementing the major version upgrade of the target software. Alternatively, that the version number of the target upgrade package matches the file included in the target upgrade package includes: Aversion number of the target software to the version number of the target upgrade package correspond to a minor version upgrade, and the target upgrade package does not include a file required for implementing the major version upgrade of the target software.

In a possible implementation, the preset condition further includes: The version number of the target upgrade package is greater than the version number of the target software, or the version number of the target upgrade package is smaller than the version number of the target software and the version number of the target upgrade package is a version number authorized by a user to install.

In a possible implementation, the attribute information of the target upgrade package includes one or more of the following: a size of the target upgrade package, a quantity of files in the target upgrade package, and a hash value, where the hash value is obtained from the target upgrade package.

In a possible implementation, the obtaining unit is further configured to obtain the upgrade package description file; and the processing unit is further configured to perform integrity verification on the upgrade package description file. The preset condition includes: The upgrade package description file passes integrity verification, and the attribute information of the target upgrade package matches the attribute information of the target upgrade package included in the upgrade package description file.

In a possible implementation, the processing unit is further configured to: query whether a version of the target upgrade package is a latest version; and when the version of the target upgrade package is the latest version, perform an operation of upgrading the target software by using the target upgrade package when the preset condition is met.

In a possible implementation, the target software is an electronic map, a target file is a non-dynamic library file, the major version upgrade is an update of a binding map version, the minor version upgrade is an update of a non-binding map version, or the major version upgrade is an update of a base map, and the minor version upgrade is an update of a non-base map.

For technical effects brought by the second aspect or the optional implementations, refer to the descriptions of the technical effects brought by the first aspect or the corresponding implementations.

According to a third aspect, an embodiment of this application provides an electronic device. The electronic device includes a processor and a memory. The memory is configured to store instructions, and the processor is configured to execute the instructions stored in the memory, so that the processor performs the method in any one of the first aspect and the possible implementations.

According to a fourth aspect, an embodiment of this application provides a chip. The chip includes a data interface and a processor. The processor is configured to perform the method according to any one of the first aspect or the possible implementations of the first aspect. For example, the chip is any chip on which software or firmware is installed on a vehicle.

According to a fifth aspect, this application provides a chip system. The chip system includes at least one processor, configured to support implementation of a function in any one of the first aspect or the possible implementations of the first aspect, for example, receiving or processing data and/or information in the foregoing method.

In a possible design, the chip system further includes a memory. The memory is configured to store program instructions and data. The memory is located inside the processor or outside the processor. The chip system may include a chip, or may include a chip and another discrete component.

According to a sixth aspect, an embodiment of this application provides a computer-readable storage medium. The computer storage medium stores a computer program. The computer program includes program instructions. When the program instructions are executed by a processor, the processor is enabled to perform the method according to any one of the first aspect or the possible implementations of the first aspect.

According to a seventh aspect, an embodiment of this application provides a computer program product. The computer program product includes program instructions. When the program instructions are executed by a processor, the processor is enabled to perform the method according to any one of the first aspect or the possible implementations of the first aspect.

### BRIEF DESCRIPTION OF DRAWINGS

FIG. 1 is an OTA vehicle upgrade architecture according to an embodiment of this application;
FIG. 2 is a schematic diagram of a plurality of components on a vehicle end related to software upgrade according to an embodiment of this application;
FIG. 3 is a flowchart of OTA vehicle upgrade according to an embodiment of this application;
FIG. 4 is a flowchart of an upgrade method according to an embodiment of this appli cati on;
FIG. 5 is a flowchart of another upgrade method according to an embodiment of this application;
FIG. 6 is a flowchart of another upgrade method according to an embodiment of this application;
FIG. 7 is a flowchart of another upgrade method according to an embodiment of this application;
FIG. 8 is a flowchart of another upgrade method according to an embodiment of this application;
FIG. 9 is a flowchart of another upgrade method according to an embodiment of this application;
FIG. 10 is a flowchart of still another upgrade method according to an embodiment of this application;
FIG. 11 is a flowchart of another upgrade method according to an embodiment of this application;
FIG. 12 is an interaction flowchart of an upgrade method according to an embodiment of this application;
FIG. 13 is an interaction flowchart of another upgrade method according to an embodiment of this application;
FIG. 14 is a schematic diagram of a structure of a software upgrade apparatus according to an embodiment of this application;
FIG. 15 is a schematic diagram of a structure of another software upgrade apparatus 150 according to an embodiment of this application; and
FIG. 16 is a schematic diagram of a structure of another software upgrade apparatus 160 according to an embodiment of this application.

### DESCRIPTION OF EMBODIMENTS

The following describes embodiments of this application with reference to the accompanying drawings in embodiments of this application.

In the specification, the claims, and the accompanying drawings of this application, the terms "first", "second", and the like are intended to distinguish between different objects but do not indicate a particular order. In addition, the terms "including", "having", and any other variant thereof are intended to cover non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

It should be understood that, in this application, "at least one (item)" means one or more, "a plurality of" means two or more, and "at least two (items)" means two or three or more. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

As described in the background, an upgrade exception may occur when related software or firmware of a vehicle is upgraded by using OTA. In this application, software (or firmware) upgrade exception means that corresponding software (or firmware) fails to be upgraded by using an upgrade package, or upgraded software (or firmware) is not a better version than that before upgrade. For example, if a version of an upgrade package obtained by an OTA master (master) module from a cloud is inconsistent with content of the upgrade package, an upgrade failure occurs when software or firmware is upgraded by using the upgrade package. For another example, a version of an upgrade package obtained by the OTA master module from a cloud is earlier than a version of installed software. In this case, if the software is upgraded by using the upgrade package, a version of upgraded software is earlier than a version of software before upgrade. Therefore, how to reduce a case in which an upgrade exception occurs in the software (or firmware) is a problem that needs to be resolved currently. This application provides an upgrade solution that can resolve the foregoing problem. The upgrade solution provided in this application is applicable to a software (or firmware) upgrade scenario, for example, a vehicle OTA upgrade scenario or a software upgrade scenario of a terminal device. The following uses the vehicle OTA upgrade scenario and the software upgrade scenario of the terminal device as an example for description.

A vehicle OTA upgrade scenario: A cloud (for example, a cloud server) sends an upgrade package to a vehicle end (for example, a vehicle), and the vehicle end upgrades, by using the upgrade package, software or firmware installed on one or more components. A possible upgrade procedure is as follows: The cloud sends the upgrade package to an OTA master module in the vehicle. After verifying the upgrade package, the OTA master module disassembles the upgrade package and distributes the upgrade package to an OTA slave (slave) module of a corresponding component. The OTA master module instructs an OTA slave module corresponding to each component to install and activate the upgrade package based on a specific dependency relationship and sequence. The OTA master module runs on a component (for example, a gateway or a telematics box) of the vehicle and coordinates and controls an OTA slave module running on another component to complete vehicle upgrade.

A software upgrade scenario of a terminal device: The terminal device (for example, a mobile phone, a tablet computer, a notebook computer, or a car) obtains a required upgrade package from a cloud server through a network; and the terminal device uses the upgrade package to upgrade software or firmware that is run by the terminal device.

In the software upgrade scenario, before upgrading corresponding software or firmware by using an upgrade package, a software upgrade apparatus (for example, the vehicle or the terminal device) verifies whether the upgrade package is secure and valid (corresponding to whether a preset condition is met), and only an upgrade package that is verified to be secure and valid is used to upgrade the software or firmware, to avoid a software upgrade exception.

The following mainly describes the upgrade solution provided in this application by using OTA vehicle upgrade as an example. The following first describes an OTA vehicle upgrade architecture with reference to the accompanying drawings.

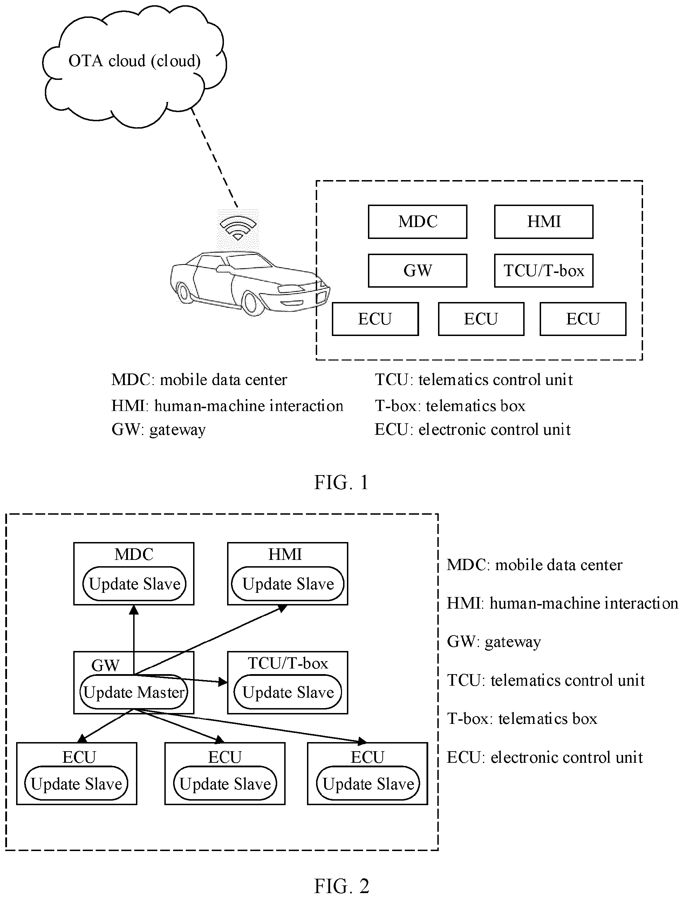

FIG. 1 is an OTA vehicle upgrade architecture according to an embodiment of this application. As shown in FIG. 1, the OTA vehicle upgrade architecture includes a cloud and a vehicle end. The cloud may be a cloud server. The cloud (namely, an OTA cloud) functions as an OTA server and uses the OTA technology to deliver an upgrade package to the vehicle end. For example, the cloud delivers the upgrade package to the vehicle end through any wireless network, for example, a 4G (or 5G) network, a satellite network, or a wireless fidelity (wireless fidelity, Wi-Fi) network. The vehicle end may implement upgrade of corresponding software or firmware by using the upgrade package received from the cloud. In this application, the vehicle end is any vehicle, for example, an unmanned vehicle, a saloon, a vehicle, a truck, a motorcycle, a bus, a tram, a golf cart, a train, an entertainment car, or a playground vehicle. It should be understood that the vehicle end may be replaced with a device that can perform software upgrade by using the upgrade package delivered by the cloud, for example, a ship, an airplane, a mobile phone, a notebook computer, a tablet computer, a wearable device, or a game console. For another device, the method in this embodiment of this application is also applicable.

The vehicle end may include a plurality of components, and upgrade of a plurality of components is usually included in vehicle upgrade. A dashed box in FIG. 1 shows a plurality of components that may be related to vehicle upgrade. For example, the component related to vehicle upgrade includes but is not limited to: a gateway (gateway, GW), a mobile data center (mobile data center, MDC), a human-machine interaction (human-machine interaction, HMI), a telematics control unit (telematics control unit, TCU)/telematics box (telematics BOX, T-box), and an electronic control unit (electronic control unit, ECU). The dashed box in FIG. 1 shows only examples of some components related to vehicle upgrade, but not all components related to vehicle upgrade. The gateway (also referred to as a gateway controller) is a core component in an electronic and electrical architecture of a vehicle. As a data exchange hub of a vehicle network, the gateway may route network data, for example, a controller area network (controller area network, CAN) and a local interconnect network (local interconnect network, LIN) in different networks. The MDC is an intelligent in-vehicle computing platform of a vehicle. The HMI is an information entertainment system of the vehicle. The TCU is also referred to as a T-box, and is mainly configured to communicate with outside of the automobile, a background system, and a mobile phone APP. The ECU is a special microcomputer controller for the vehicle. It should be understood that, in vehicle upgrade, upgrade of only some components in the dashed box may be related, or upgrade of components that are not included in the dashed box may be included. This is not limited in this application. For example, components related to vehicle upgrade may further include: a cockpit domain controller (cockpit domain controller, CDC) and a vehicle domain controller (vehicle domain controller, VDC).

During vehicle upgrade, the vehicle end coordinates upgrade of each component through a component running an OTA master module. The OTA master module runs on a component (for example, the gateway or the telematics box) of the vehicle end and coordinates and controls an upgrade module (an OTA slave module) of another component to complete vehicle upgrade. The OTA master module may alternatively be an independent module. This is not limited in this embodiment of this application.

FIG. 2 is a schematic diagram of a plurality of components on a vehicle end related to software upgrade according to an embodiment of this application. As shown in FIG. 2, an OTA master module runs on a GW, and an OTA slave module runs on an MDC, an HMI, a TCU/T-box, and an ECU separately. The vehicle end in FIG. 2 is used as an example. The GW receives an upgrade package from a cloud. The OTA master module running on the GW verifies the upgrade package, disassembles the upgrade package, and distributes the upgrade package to an OTA slave module of a corresponding component. The OTA master module instructs each component to install and activate the upgrade package based on a specific dependency relationship and sequence. It should be understood that FIG. 2 is merely an example of the vehicle end. The OTA master module may not necessarily run on the GW, and may further run on the T-box or another component.

FIG. 1 describes an OTA vehicle upgrade architecture, and FIG. 2 describes an example of a plurality of components on a vehicle end related to software upgrade. The following describes an example of an OTA vehicle upgrade procedure with reference to the accompanying drawings.

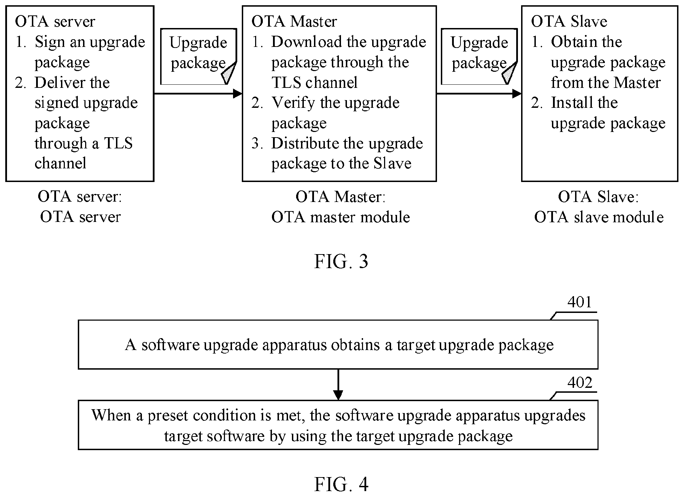

FIG. 3 is a flowchart of OTA vehicle upgrade according to an embodiment of this application. As shown in FIG. 3, an OTA server (for example, a cloud), an OTA master module, and an OTA slave module jointly implement OTA vehicle upgrade. Operations performed by the OTA server include: signing an upgrade package; and delivering the signed upgrade package through a transport layer security (transport layer security, TLS) channel. For example, the cloud (namely, the OTA server) delivers, through the TLS channel, the signed upgrade package to a component that runs the OTA master module on a vehicle end. Operations performed by the OTA master module include: downloading the upgrade package through the TLS channel; verifying the upgrade package, for example, verifying a signature of the upgrade package; and disassembling the upgrade package and distributing the upgrade package to an OTA slave module of a corresponding component. Operations performed by the OTA slave module include: receiving the upgrade package distributed by the OTA master module; and installing the upgrade package, that is, upgrading corresponding software or firmware by using the upgrade package.

In actual application, a complete OTA vehicle upgrade procedure includes steps of making, releasing, downloading, distributing, and installing the upgrade package. The OTA vehicle upgrade procedure in FIG. 3 describes steps of downloading, distributing, and installing the upgrade package. To ensure security of the OTA vehicle upgrade procedure, security of each step needs to be ensured. The following describes operations performed in the cloud, transmission, and the vehicle end to ensure security of the OTA vehicle upgrade procedure.

The cloud: A certificate, a signature, and an encryption mechanism are used to ensure that the upgrade package is not made or released randomly and content of the upgrade package is not maliciously obtained. In this way, the cloud can ensure security of the upgrade package during making and releasing.

Transmission: A reliable physical link and a secure transmission protocol are used to ensure network transmission security. In this way, security of the upgrade package during downloading and distribution can be ensured.

The vehicle end: After downloading the upgrade package, the vehicle end verifies whether the signature of the upgrade package is valid.

It is found through research that there are some security risks when the vehicle end verifies a to-be-installed upgrade package in the foregoing manner. For example, the upgrade package is stored locally after being downloaded, and the upgrade package is replaced with an upgrade package of an earlier version before being installed. For another example, the signature of the upgrade package is valid, but a version of the upgrade package is inconsistent with the content of the upgrade package. In the two examples, if the vehicle end uses the foregoing manner of verifying the upgrade package, the upgrade package passes verification. However, an upgrade exception may occur when a software or firmware is upgraded by using the upgrade package that passes verification. A main principle of the upgrade method provided in this application is: optimizing or adding conditions for installing the upgrade package, and verifying, by using these conditions, security of upgrading the corresponding software (or firmware) by using the upgrade package. Further, in the upgrade method provided in this application, security protection is further performed on an upgrade package description file to reduce a security risk. The following describes an upgrade method provided in this application with reference to the accompanying drawings.

FIG. 4 is a flowchart of an upgrade method according to an embodiment of this application. As shown in FIG. 4, the method includes the following steps.

401: A software upgrade apparatus obtains a target upgrade package.

The software upgrade apparatus may be a component on a vehicle on which software or firmware is installed, for example, a GW, a T-box, or an ECU, may be a terminal device on which software or firmware is installed, for example, a mobile phone, a tablet computer, a notebook computer, a game console, or a wearable device, or may be another device on which software or firmware is installed.

In a possible implementation of step 401, the software upgrade apparatus downloads the target upgrade package from a cloud (for example, a cloud server). Alternatively, the software upgrade apparatus downloads an overall upgrade package from the cloud (for example, the cloud server), and disassembles the overall upgrade package to obtain the target upgrade package. The overall upgrade package may be disassembled to obtain the target upgrade package and an upgrade package used to upgrade software on another component.

In another possible implementation of step 401, the software upgrade apparatus receives a target upgrade package delivered by a component (for example, a GW or a T-box) that runs an OTA master module on a vehicle (or a terminal device). The software upgrade apparatus may be a component that runs an OTA slave module on the vehicle, for example, an ECU, an MDC, or an HMI; or may be a component that runs an OTA slave module on the terminal device, for example, a graphics processing unit (graphics processing unit, GPU). For example, the component (for example, the GW or the T-box) that runs the OTA master module on the vehicle disassembles the overall upgrade package downloaded from the cloud, and distributes the overall upgrade package to an OTA slave module of a corresponding component. In this example, the overall upgrade package may be disassembled to obtain the target upgrade package and the upgrade package used to upgrade the software on the another component, and the software upgrade apparatus may be understood as a component to which the target upgrade package is distributed. For another example, the component on the terminal device (for example, a mobile phone) that runs the OTA master module, for example, a central processing unit (central processing unit, CPI), disassembles the overall upgrade package downloaded from the cloud, and distributes the overall upgrade package to an OTA slave module running on the GPU. In this example, the software upgrade apparatus is a GPU on the terminal device.

402: When a preset condition is met, the software upgrade apparatus upgrades target software by using the target upgrade package.

The preset condition is used to verify security of upgrading the target software by using the target upgrade package. The preset condition includes one or two of the following: attribute information of the target upgrade package matches attribute information of the target upgrade package included in an upgrade package description file, and a version number of the target upgrade package matches a file included in the target upgrade package.

In a possible implementation, the preset condition further includes: the version number of the target upgrade package is greater than a version number of the target software, or the version number of the target upgrade package is smaller than the version number of the target software and the version number of the target upgrade package is a version number authorized by a user to install.

In some embodiments, after making the target upgrade package, an OTA server (for example, the cloud) may generate the upgrade package description file. The upgrade package description file includes description information of the target upgrade package, for example, the version number and a download address of the target upgrade package. The software upgrade apparatus may obtain the target upgrade package and the upgrade package description file separately, or may obtain the upgrade package description file and the target upgrade package at the same time. When obtaining the upgrade package description file, the software upgrade apparatus may securely store the upgrade package description file, to ensure integrity of the upgrade package description file.

That a version number of the target upgrade package matches a file included in the target upgrade package may be: the version number of the target software to the version number of the target upgrade package correspond to a major version upgrade, and the target upgrade package includes a file required for implementing the maj or version upgrade of the target software; or the version number of the target software to the version number of the target upgrade package correspond to a minor version upgrade, and the target upgrade package does not include the file required for implementing the major version upgrade of the target software.

In a possible implementation, the version number of the target upgrade package and the version number of the target software each include a main version number (or referred to as a major version number) and a subversion number (or referred to as a minor version number). For example, if the version number of the target upgrade package is 11.0, 11 indicates the main version number, and 0 indicates the sub version number. For another example, if the version number of the target software is 10.1, 10 indicates the main version number, and 1 indicates the sub version number. That the version number of the target software to the version number of the target upgrade package correspond to a major version upgrade may be: the main version number of the target software is different from the main version number of the target upgrade package. For example, the version number of the target software is 10.1, the version number of the target upgrade package is 11.0, and the version number of the target software to the version number of the target upgrade package correspond to the major version upgrade. That the version number of the target software to the version number of the target upgrade package correspond to a minor version upgrade may be: the main version number of the target software is the same as the main version number of the target upgrade package, and the sub version number of the target software is different from the sub version number of the target upgrade package. For example, the version number of the target software is 10.1, the version number of the target upgrade package is 10.2, and the version number of the target software to the version number of the target upgrade package correspond to the minor version upgrade.

For same software (or firmware), formats of files included in an upgrade package used to implement a major version upgrade of the software (or firmware) and an upgrade package used to implement a minor version upgrade of the software (or firmware) are generally not completely the same.

In a possible implementation, an upgrade package used to implement the major version upgrade of the target software includes a file in a first format, and an upgrade package used to implement the minor version upgrade of the target software does not include the file in the first format. For example, the target software is an electronic map, an upgrade package including the file in the first format needs to be used to implement the major version upgrade of the target software, and an upgrade package including only the file in the first format needs to be used to implement the minor version upgrade of the target software.

In another possible implementation, the upgrade package used to implement the minor version upgrade of the target software includes a file in a second format, and the upgrade package used to implement the major version upgrade of the target software does not include the file in the second format. The file in the first format and the file in the second format are not limited in this application. It should be understood that a file included in one upgrade package may indicate whether the upgrade package is used to implement a major version upgrade or a minor version upgrade of software. In other words, it may be determined, through the file included in the upgrade package, whether the upgrade package is used to implement the major version upgrade or the minor version upgrade of the software. A file included in the target upgrade package may indicate whether the target upgrade package is used to implement the major version upgrade or the minor version upgrade of the target software. The version number of the target software to the version number of the target upgrade package correspond to the major version upgrade or the minor version upgrade.

It may be understood that, if the file included in the target upgrade package indicates that the target upgrade package is used to implement the major version upgrade of the target software, and the version number of the target software to the version number of the target upgrade package correspond to the minor version upgrade, it indicates that the file included in the target upgrade package is inconsistent with a version of the target upgrade package. Similarly, if the file included in the target upgrade package indicates that the target upgrade package is used to implement the minor version upgrade of the target software, and the version number of the target software to the version number of the target upgrade package correspond to the major version upgrade, it indicates that the file included in the target upgrade package is inconsistent with the version of the target upgrade package. In some embodiments, the software upgrade apparatus may determine, by determining whether the version number of the target upgrade package matches the file included in the target upgrade package (that is, whether the version and content of the target upgrade package are consistent), whether an exception occurs when the target software is upgraded by using the target upgrade package. The software upgrade apparatus may alternatively determine, in another manner, whether the version number of the target upgrade package matches the file included in the target upgrade package. This is not limited in this application.

Generally, for software, upgrade of a core module is the major version upgrade, and upgrade of a non-core module is the minor version upgrade. For a map update, an update of a major version map (namely, the major version upgrade) is an update of a base map or an update of a binding map version, and an update of a minor version map (namely, the minor version upgrade) is an update of a non-base map or an update of a non-binding map version (for example, an update of a dynamic map). Generally, a provider of the upgrade package decides whether upgrade of corresponding software by using the upgrade package is a major version upgrade or a minor version upgrade. For example, if a version of the target software is 10.1, and the version of the target upgrade package is 11.0 (determined by a vendor), this is a major version upgrade.

In a possible implementation, the attribute information of the target upgrade package includes one or more of the following: a size of the target upgrade package, a quantity of files in the target upgrade package, and a hash value, where the hash value is obtained from the target upgrade package. The hash value obtained from the target upgrade package may be one hash value, or may be a group of hash values. For example, one hash value is obtained from each file included in the target upgrade package. In some embodiments, the attribute information of the target upgrade package may include one hash value obtained from files in the target upgrade package. In some embodiments, the attribute information of the target upgrade package may include a plurality of hash values obtained by using the files in the target upgrade package, where each file corresponds to one hash value. The attribute information of the target upgrade package may further include the version number, the download address, and the like of the target upgrade package. In some embodiments, after obtaining the target upgrade package, the software upgrade apparatus may obtain the attribute information of the target upgrade package based on the target upgrade package, for example, query the quantity of files in the target upgrade package and the size of the target upgrade package, and calculate a hash value corresponding to the target upgrade package; obtain the attribute information of the target upgrade package from the upgrade package description file; and determine whether the attribute information of the target upgrade package obtained based on the target upgrade package matches the attribute information of the target upgrade package obtained from the upgrade package description file.

In this embodiment of this application, when the preset condition is met, the target software is upgraded by using the target upgrade package, so that security of upgrading the target software by using the target upgrade package can be ensured, and occurrence of an upgrade exception can be reduced.

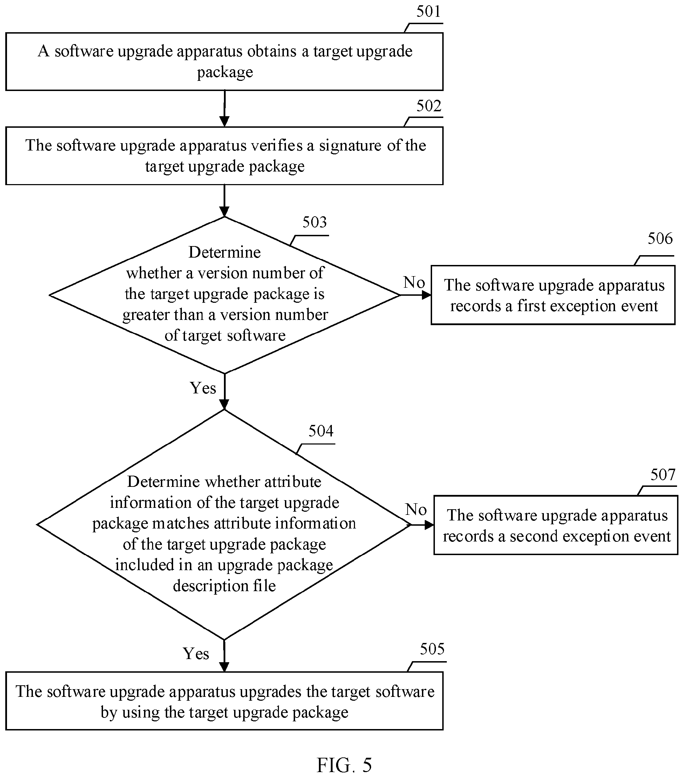

FIG. 5 is a flowchart of another upgrade method according to embodiment of this application. As shown in FIG. 5, the method includes the following steps.

501: A software upgrade apparatus obtains a target upgrade package.

An implementation of step 501 may be the same as an implementation of step 401, and details are not described herein again.

502: The software upgrade apparatus verifies a signature of the target upgrade package.

That the software upgrade apparatus verifies a signature of the target upgrade package may be verifying a digital signature of the target upgrade package. When the signature of the target upgrade package fails to pass verification, the software upgrade apparatus ends an upgrade procedure, for example, records an event that the signature of the target upgrade package fails to pass verification. The digital signature (also referred to as a public key digital signature) is a digital string that can be generated only by an information sender and cannot be forged by others. The digital string is also a valid proof of authenticity of information sent by the information sender. It is a method for authenticating digital information that is similar to a common physical signature written on paper, but is implemented by using a technology in the field of public key encryption. A set of digital signatures generally defines two complementary operations, one is used for signature, and the other is used for verification. The digital signature is an application of an asymmetric key encryption technology and a digital digest technology. A signing process may be as follows: When sending a packet (for example, the target upgrade package), a sender uses a hash function to generate a packet digest from a packet text, and then encrypts the digest (namely, the packet digest) with a private key of the sender. The encrypted packet digest is sent to a receiver (corresponding to the software upgrade apparatus) as a digital signature of the packet with the packet. The receiver uses the same hash function of the sender to calculate a packet digest from the received original packet, and then uses a public key to decrypt the digital signature attached to the packet. If the two digests are the same, the receiver can confirm that the packet is from the sender. The digital signature has two functions. First, because others cannot counterfeit a signature of the sender, the digital signature can determine that a message is indeed signed and sent by the sender. Second, the digital signature can determine integrity of the message. Because a feature of the digital signature is that the digital signature represents characteristics of a file, if the file changes, a value of the digital digest also changes. Different files may obtain different digital digests. One digital signature is related to one hash function, the public key of the receiver, and the private key of the sender. The software upgrade apparatus verifies the signature of the target upgrade package, so that not only integrity of the target upgrade package can be determined, but also it can be determined that the target upgrade package is signed and sent by the sender.

503: Determine whether a version number of the target upgrade package is greater than a version number of target software.

If the version number of the target upgrade package is greater than the version number of the target software, step 504 is performed. If the version number of the target upgrade package is not greater than the version number of the target software, step 506 is performed. If the version number of the target upgrade package is greater than the version number of the target software, it indicates that a version of the target upgrade package is later than a version of the target software. Step 503 is optional but not mandatory.

504: Determine whether attribute information of the target upgrade package matches attribute information of the target upgrade package included in an upgrade package description file.

If the attribute information of the target upgrade package matches the attribute information of the target upgrade package included in the upgrade package description file, step 505 is performed. If the attribute information of the target upgrade package does not match the attribute information of the target upgrade package included in the upgrade package description file, step 507 is performed. The attribute information of the target upgrade package may include one or more of a size of the target upgrade package, a quantity of files in the target upgrade package, and a hash value, and may further include the version number, a download address, and the like of the target upgrade package. The software upgrade apparatus may obtain the target upgrade package and the upgrade package description file separately, or may obtain the upgrade package description file and the target upgrade package at the same time. A sequence of step 503 and step 504 is not limited. The software upgrade apparatus may perform step 503 first, and then perform step 504; or may perform step 504 first, and then perform step 503; or may perform step 503 and step 504 at the same time. It may be understood that the software upgrade apparatus upgrades the target software by using the target upgrade package only after determining that the version number of the target upgrade package is greater than the version number of the target software and that the attribute information of the target upgrade package matches the attribute information of the target upgrade package included in the upgrade package description file. In this way, an upgrade exception that occurs when the target software is upgraded by using the target upgrade package can be avoided.

505: The software upgrade apparatus upgrades the target software by using the target upgrade package.

506: The software upgrade apparatus records a first exception event.

The first exception event may be an event in which the version number of the target upgrade package is smaller than the version number of the target software. The software upgrade apparatus may record the first exception event in a log, so that a user can quickly find an occurrence position of an exception and process the exception by analyzing the exception event.

507: The software upgrade apparatus records a second exception event.

The second exception event may be an event that the version number of the target upgrade package does not match a file included in the target upgrade package. The software upgrade apparatus may record the second exception event in the log, so that the user can quickly find an occurrence position of an exception and process the exception by analyzing the exception event.

In this embodiment of this application, the signature of the target upgrade package is verified, so that not only integrity of the target upgrade package can be determined, but also it can be determined that the target upgrade package is signed and sent by the sender. It is determined whether the version number of the target upgrade package is greater than the version number of the target software, to avoid upgrading the target software by using an upgrade package of an earlier version. Further, it is determined whether the attribute information of the target upgrade package matches the attribute information of the target upgrade package included in the upgrade package description file, to avoid an upgrade exception.

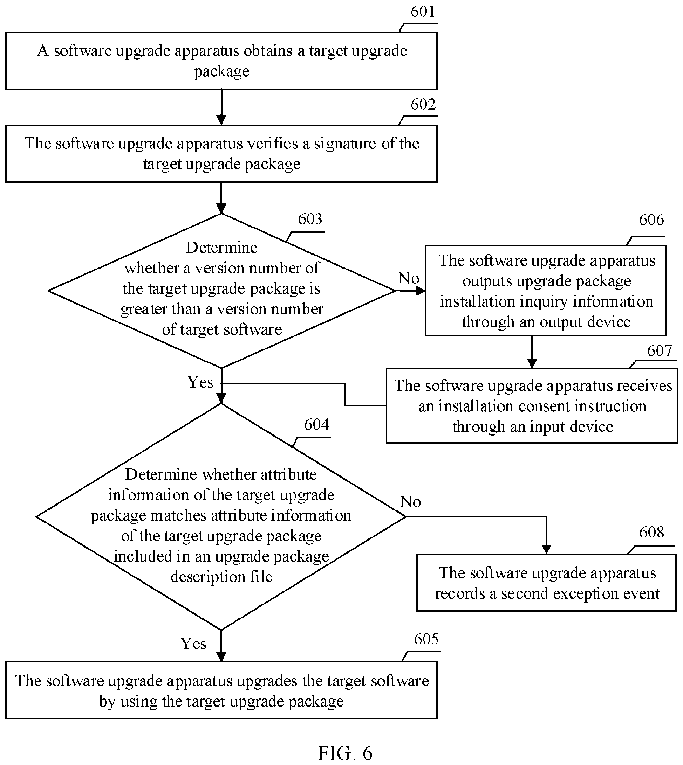

FIG. 6 is a flowchart of another upgrade method according to an embodiment of this application. As shown in FIG. 6, the method includes the following steps.

601: A software upgrade apparatus obtains a target upgrade package.

602: The software upgrade apparatus verifies a signature of the target upgrade package.

603: Determine whether a version number of the target upgrade package is greater than a version number of target software.

If the version number of the target upgrade package is greater than the version number of the target software, step 604 is performed. If the version number of the target upgrade package is not greater than the version number of the target software, step 606 is performed.

604: Determine whether attribute information of the target upgrade package matches attribute information of the target upgrade package included in an upgrade package description file.

If the attribute information of the target upgrade package matches the attribute information of the target upgrade package included in the upgrade package description file, step 605 is performed. If the attribute information of the target upgrade package does not match the attribute information of the target upgrade package included in the upgrade package description file, step 608 is performed.

605: The software upgrade apparatus upgrades the target software by using the target upgrade package.

An implementation of step 601 to step 605 may be the same as an implementation of step 501 to step 505.

606: The software upgrade apparatus outputs upgrade package installation inquiry information through an output device.

The output device may be a display, an audio device, or the like. The upgrade package installation inquiry information is used to query whether a user updates the target software by using a target upgrade package of an earlier version. For example, the upgrade package installation inquiry information is "whether to use a target upgrade package whose version number is 11.0 to update target software whose version number is 10.2". For example, the software upgrade apparatus is a GW in a vehicle, and the output device is a display screen in the vehicle.

607: The software upgrade apparatus receives an installation consent instruction through an input device.

The input device may be a touchscreen, an audio device, a keyboard, a mouse, or the like. For example, the software upgrade apparatus is the GW in the vehicle, and the input device is a touchscreen in the vehicle. The installation consent instruction indicates that the user agrees to update the target software by using the target upgrade package of the earlier version. For example, the upgrade package installation inquiry information output by the software upgrade apparatus through the display includes an option of agreeing to install and an option of disagreeing to install. The software upgrade apparatus receives an operation of selecting the option of agreeing to install through the input device is to receive the installation consent instruction, and the software upgrade apparatus receives an operation of selecting the option of disagreeing to install through the input device is to receive an installation rejection instruction. The installation rejection instruction indicates that the user does not agree to update the target software by using the target upgrade package of the earlier version.

It can be learned from FIG. 6 that, after receiving the installation consent instruction through the input device, the software upgrade apparatus performs step 604. Step 607 may be replaced with the following: After receiving the installation rejection instruction through the input device, the software upgrade apparatus records a first exception event. The first exception event may be an event in which the version number of the target upgrade package is smaller than the version number of the target software.

608: The software upgrade apparatus records a second exception event.

The second exception event may be an event that the version number of the target upgrade package does not match a file included in the target upgrade package.

Compared with the upgrade method procedure in FIG. 5, in the upgrade method procedure in FIG. 6, when the user agrees to update the target software by using the target upgrade package of the earlier version, a subsequent upgrade procedure may continue to be performed. In this embodiment of this application, the user may update the target software to a required version based on a requirement of the user, so that an upgrade exception that occurs when the target software is upgraded by using the target upgrade package can be avoided.

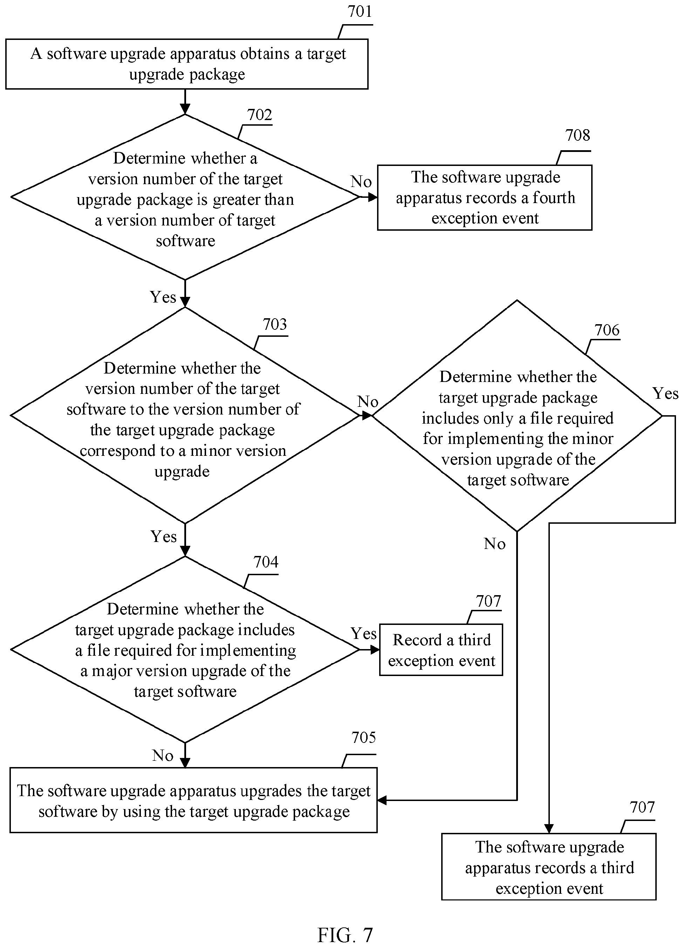

FIG. 7 is a flowchart of another upgrade method according to an embodiment of this application. As shown in FIG. 7, the method includes the following steps.

701: A software upgrade apparatus obtains a target upgrade package.

702: Determine whether a version number of the target upgrade package is greater than a version number of target software.

If the version number of the target upgrade package is greater than the version number of the target software, step 703 is performed. If the version number of the target upgrade package is not greater than the version number of the target software, step 708 is performed. Step 702 is optional but not mandatory.

703: Determine whether the version number of the target software to the version number of the target upgrade package correspond to a minor version upgrade.

If the version number of the target software to the version number of the target upgrade package correspond to the minor version upgrade, step 704 is performed. If the version number of the target software to the version number of the target upgrade package do not correspond to the minor version upgrade, step 706 is performed.

704: Determine whether the target upgrade package includes a file required for implementing a major version upgrade of the target software.

If the target upgrade package includes the file required for implementing the major version upgrade of the target software, step 705 is performed. If the target upgrade package does not include the file required for implementing the major version upgrade of the target software, step 707 is performed.

705: The software upgrade apparatus upgrades the target software by using the target upgrade package.

706: Determine whether the target upgrade package includes only a file required for implementing the minor version upgrade of the target software.

If the target upgrade package includes only the file required for implementing the minor version upgrade of the target software, step 705 is performed. If the target upgrade package does not include only the file required for implementing the minor version upgrade of the target software, step 707 is performed.

That the target upgrade package includes only the file required for implementing the minor version upgrade of the target software is equivalent to that the target upgrade package does not include the file required for implementing the major version upgrade of the target software.

707: The software upgrade apparatus records a third exception event.

The third exception event may be that the version number of the target upgrade package does not match a file included in the target upgrade package. The software upgrade apparatus may record the third exception event in a log, so that a user can quickly find an occurrence position of an exception and process the exception by analyzing the exception event.

708: The software upgrade apparatus records a fourth exception event.

The fourth exception event may be an event in which the version number of the target upgrade package is smaller than the version number of the target software.

In this embodiment of this application, it is determined whether the version number of the target upgrade package is greater than the version number of the target software, to avoid upgrading the target software by using an upgrade package of an earlier version. Further, it is determined whether the version number of the target upgrade package matches the file included in the target upgrade package, to avoid an upgrade exception.

In FIG. 7, after determining that the version number of the target upgrade package is greater than the version number of the target software and the version number of the target upgrade package matches the file included in the target upgrade package, the software upgrade apparatus upgrades the target software by using the target upgrade package. In this way, an upgrade exception that occurs when the target software is upgraded by using the target upgrade package can be avoided. FIG. 7 is only an example of determining whether the version number of the target upgrade package is greater than the version number of the target software and whether the version number of the target upgrade package matches the file included in the target upgrade package. It should be understood that, the software upgrade apparatus may alternatively determine, in another manner, whether the version number of the target upgrade package is greater than the version number of the target software, and whether the version number of the target upgrade package matches the file included in the target upgrade package. The following describes another example of determining whether the version number of the target upgrade package is greater than the version number of the target software and whether the version number of the target upgrade package matches the file included in the target upgrade package.

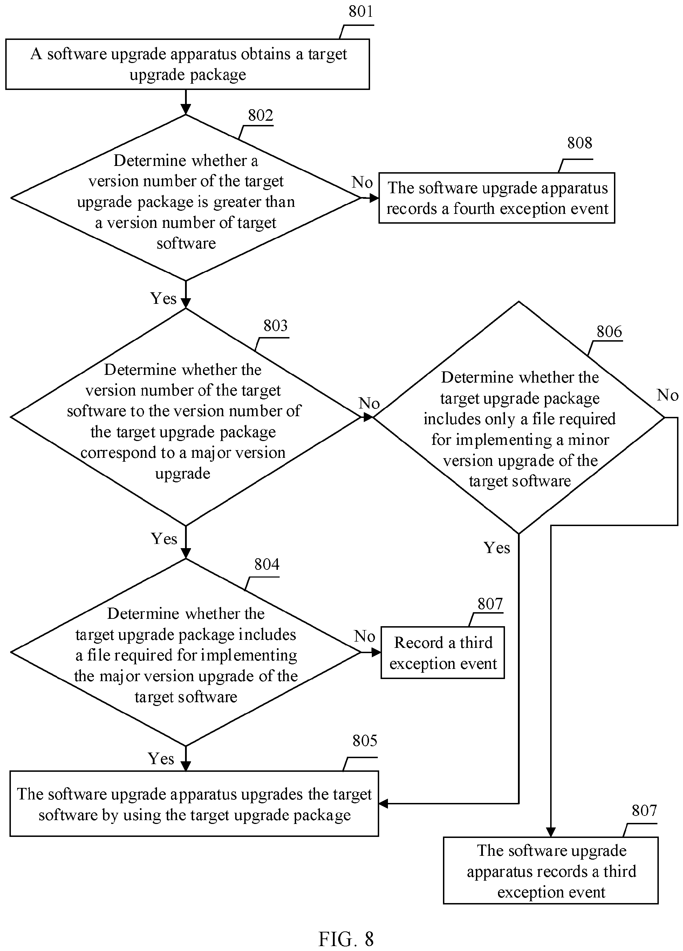

FIG. 8 is a flowchart of another upgrade method according to an embodiment of this application. As shown in FIG. 8, the method includes the following steps.

801: A software upgrade apparatus obtains a target upgrade package.

802: Determine whether a version number of the target upgrade package is greater than a version number of target software.

If the version number of the target upgrade package is greater than the version number of the target software, step 803 is performed. If the version number of the target upgrade package is not greater than the version number of the target software, step 808 is performed. Step 802 is optional but not mandatory.

803: Determine whether the version number of the target software to the version number of the target upgrade package correspond to a major version upgrade.

If the version number of the target software to the version number of the target upgrade package correspond to the major version upgrade, step 804 is performed. If the version number of the target software to the version number of the target upgrade package do not correspond to the major version upgrade, step 806 is performed.

804: Determine whether the target upgrade package includes a file required for implementing the major version upgrade of the target software.

If the target upgrade package includes the file required for implementing the major version upgrade of the target software, step 805 is performed. If the target upgrade package does not include the file required for implementing the major version upgrade of the target software, step 807 is performed.

805: The software upgrade apparatus upgrades the target software by using the target upgrade package.

806: Determine whether the target upgrade package includes only a file required for implementing a minor version upgrade of the target software.

If the target upgrade package includes only the file required for implementing the minor version upgrade of the target software, step 805 is performed. If the target upgrade package does not include only the file required for implementing the minor version upgrade of the target software, step 807 is performed.

That the target upgrade package includes only the file required for implementing the minor version upgrade of the target software is equivalent to that the target upgrade package does not include the file required for implementing the major version upgrade of the target software.

807: The software upgrade apparatus records a third exception event.

The third exception event may be that the version number of the target upgrade package does not match a file included in the target upgrade package. The software upgrade apparatus may record the third exception event in a log, so that a user can quickly find an occurrence position of an exception and process the exception by analyzing the exception event.

808: The software upgrade apparatus records a fourth exception event.

The third exception event may be an event in which the version number of the target upgrade package is smaller than the version number of the target software.

A main principle of the upgrade method procedure in FIG. 8 is the same as a main principle of the upgrade method procedure in FIG. 7. Therefore, the method procedure in FIG. 8 may be considered as a variant of the method procedure in FIG. 7.

In this embodiment of this application, it is determined whether the version number of the target upgrade package is greater than the version number of the target software, to avoid upgrading the target software by using an upgrade package of an earlier version. Further, it is determined whether the version number of the target upgrade package matches the file included in the target upgrade package, to avoid an upgrade exception.

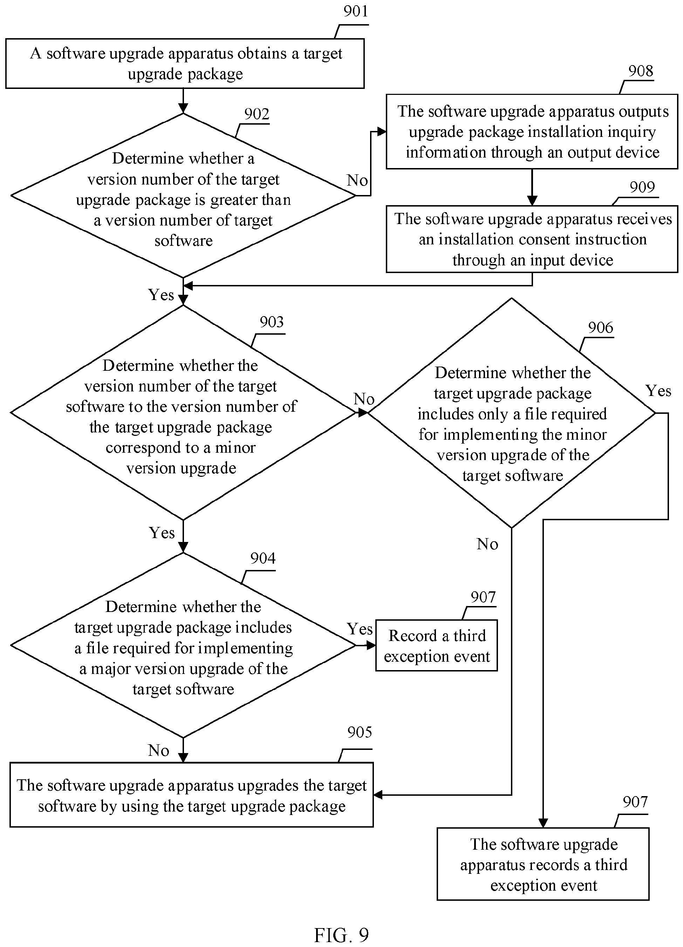

FIG. 9 is a flowchart of another upgrade method according to an embodiment of this application. As shown in FIG. 9, the method includes the following steps.

901: A software upgrade apparatus obtains a target upgrade package.

902: Determine whether a version number of the target upgrade package is greater than a version number of target software.

If the version number of the target upgrade package is greater than the version number of the target software, step 903 is performed. If the version number of the target upgrade package is not greater than the version number of the target software, step 908 is performed.

903: Determine whether the version number of the target software to the version number of the target upgrade package correspond to a minor version upgrade.

If the version number of the target software to the version number of the target upgrade package correspond to the minor version upgrade, step 904 is performed. If the version number of the target software to the version number of the target upgrade package do not correspond to the minor version upgrade, step 906 is performed.

904: Determine whether the target upgrade package includes a file required for implementing a major version upgrade of the target software.

If the target upgrade package includes the file required for implementing the major version upgrade of the target software, step 905 is performed. If the target upgrade package does not include the file required for implementing the major version upgrade of the target software, step 907 is performed.

905: The software upgrade apparatus upgrades the target software by using the target upgrade package.

906: Determine whether the target upgrade package includes only a file required for implementing the minor version upgrade of the target software.

If the target upgrade package includes only the file required for implementing the minor version upgrade of the target software, step 905 is performed. If the target upgrade package does not include only the file required for implementing the minor version upgrade of the target software, step 907 is performed.

That the target upgrade package includes only the file required for implementing the minor version upgrade of the target software is equivalent to that the target upgrade package does not include the file required for implementing the major version upgrade of the target software.

907: The software upgrade apparatus records a third exception event.

The third exception event may be that the version number of the target upgrade package does not match a file included in the target upgrade package. The software upgrade apparatus may record the third exception event in a log, so that a user can quickly find an occurrence position of an exception and process the exception by analyzing the exception event.

908: The software upgrade apparatus outputs upgrade package installation inquiry information through an output device.

An implementation of step 908 may be the same as an implementation of step 606.

909: The software upgrade apparatus receives an installation consent instruction through an input device.

It can be learned from FIG. 9 that, after receiving the installation consent instruction through the input device, the software upgrade apparatus performs step 903. Step 909 may be replaced with the following: After receiving an installation rejection instruction through the input device, the software upgrade apparatus records a fourth exception event. The fourth exception event may be an event in which the version number of the target upgrade package is smaller than the version number of the target software.

Compared with the upgrade method procedure in FIG. 7, in the upgrade method procedure in FIG. 9, when a user agrees to update the target software by using a target upgrade package of an earlier version, a subsequent upgrade procedure may continue to be performed. In this embodiment of this application, the user may update the target software to a required version based on a requirement of the user, so that an upgrade exception that occurs when the target software is upgraded by using the target upgrade package can be avoided.

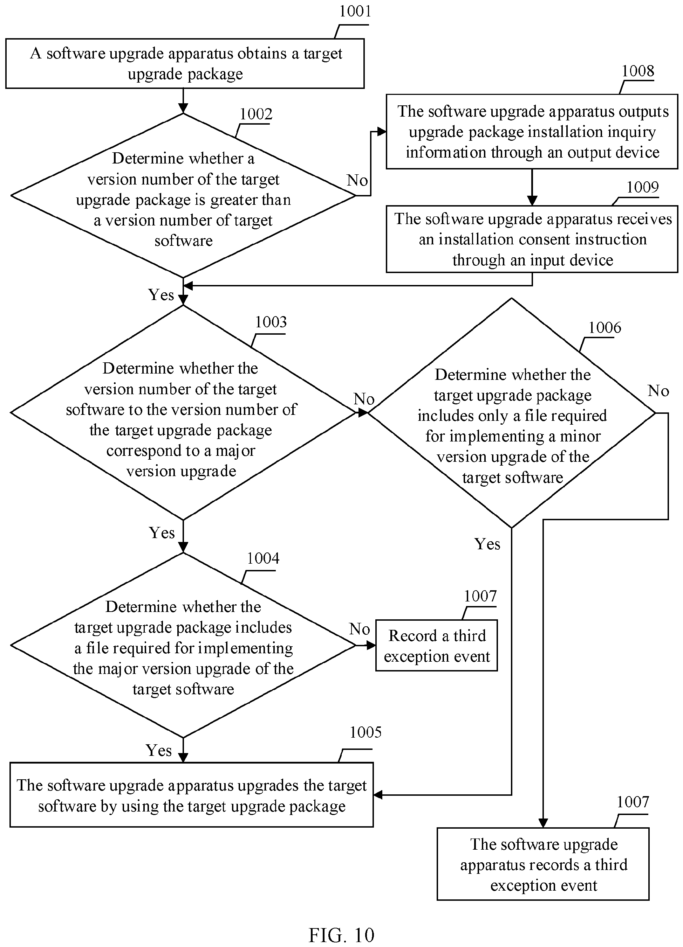

FIG. 10 is a flowchart of another upgrade method according to an embodiment of this application. As shown in FIG. 10, the method includes the following steps.

1001: A software upgrade apparatus obtains a target upgrade package.

1002: Determine whether a version number of the target upgrade package is greater than a version number of target software.

If the version number of the target upgrade package is greater than the version number of the target software, step 1003 is performed. If the version number of the target upgrade package is not greater than the version number of the target software, step 1008 is performed.

1003: Determine whether the version number of the target software to the version number of the target upgrade package correspond to a major version upgrade.

If the version number of the target software to the version number of the target upgrade package correspond to the major version upgrade, step 1004 is performed. If the version number of the target software to the version number of the target upgrade package do not correspond to the major version upgrade, step 1006 is performed.

1004: Determine whether the target upgrade package includes a file required for implementing the major version upgrade of the target software.

If the target upgrade package includes the file required for implementing the major version upgrade of the target software, step 1005 is performed. If the target upgrade package does not include the file required for implementing the major version upgrade of the target software, step 1007 is performed.

1005: The software upgrade apparatus upgrades the target software by using the target upgrade package.

1006: Determine whether the target upgrade package includes only a file required for implementing a minor version upgrade of the target software.

If the target upgrade package includes only the file required for implementing the minor version upgrade of the target software, step 1005 is performed. If the target upgrade package does not include only the file required for implementing the minor version upgrade of the target software, step 1007 is performed.

That the target upgrade package includes only the file required for implementing the minor version upgrade of the target software is equivalent to that the target upgrade package does not include the file required for implementing the major version upgrade of the target software.

1007: The software upgrade apparatus records a third exception event.

The third exception event may be that the version number of the target upgrade package does not match a file included in the target upgrade package. The software upgrade apparatus may record the third exception event in a log, so that a user can quickly find an occurrence position of an exception and process the exception by analyzing the exception event.

1008: The software upgrade apparatus outputs upgrade package installation inquiry information through an output device.

An implementation of step 1008 may be the same as an implementation of step 606.

1009: The software upgrade apparatus receives an installation consent instruction through an input device.

It can be learned from FIG. 10 that, after receiving the installation consent instruction through the input device, the software upgrade apparatus performs step 1003. Step 1009 may be replaced with the following: After receiving an installation rejection instruction through the input device, the software upgrade apparatus records a fourth exception event. The fourth exception event may be an event in which the version number of the target upgrade package is smaller than the version number of the target software.

In this embodiment of this application, it is determined whether the version number of the target upgrade package is greater than the version number of the target software, to avoid upgrading the target software by using an upgrade package of an earlier version. Further, it is determined whether the version number of the target upgrade package matches the file included in the target upgrade package, to avoid an upgrade exception.

It should be understood that FIG. 5 to FIG. 10 are merely examples of several upgrade method procedures that are more detailed and complete than the upgrade method procedure in FIG. 4 and that are listed in this application, instead of all embodiments.

In the method procedures in FIG. 5, FIG. 7, and FIG. 9, the software upgrade apparatus compares whether the version number of the target upgrade package is greater than the version number of the target software, to avoid upgrading the target software by using a target upgrade package whose version number is smaller than the version number of the target software. In the method procedures in FIG. 5, FIG. 7, and FIG. 9, the following problem may exist: If the version number of target software is 5.1, and a version number of a downloaded upgrade package is 5.2, an upgrade package whose version number is 5.3 may be further obtained currently. If the software upgrade apparatus upgrades software by using the upgrade package whose version number is 5.2, and a version number of an upgraded software is also greater than a current version number of the software, the software upgrade apparatus may upgrade the software by using the upgrade package whose version number is 5.2. However, it is a better choice for the software upgrade apparatus to upgrade the software by using the upgrade package whose version number is 5.3, because in this way, the software can be directly upgraded to a latest version. To resolve a problem that the software upgrade apparatus cannot directly upgrade the target software to a latest version, a step of querying whether a version of the target upgrade package is a latest version may be added to the method procedures in FIG. 5, FIG. 7, and FIG. 9.

In a possible implementation, after obtaining the target upgrade package, the software upgrade apparatus may first query whether the version of the target upgrade package is the latest version. If the version of the target upgrade package is the latest version, a procedure after the target upgrade package is obtained in the method procedure in FIG. 5, FIG. 7, or FIG. 9 is performed. If the version of the target upgrade package is not the latest version, an exception event is recorded. The exception event may be an event in which the version of the target upgrade package is not the latest version.

In a possible implementation, the operation of determining whether the version number of the target upgrade package is greater than the version number of the target software in the method procedures in FIG. 5, FIG. 7, or FIG. 9 may be replaced with: determining whether a condition that the version number of the target upgrade package is greater than the version number of the target software and the version of the target upgrade package is the latest version is met.

In a possible implementation, in the method procedures in FIG. 5, FIG. 7, or FIG. 9, after it is determined whether the version number of the target upgrade package is greater than the version number of the target software, it is queried whether the version of the target upgrade package is the latest version. If it is found that the version of the target upgrade package is the latest version, another determining step is performed, for example, step 504, step 703, and step 903; or if it is found that the version of the target upgrade package is not the latest version, the exception event is recorded.

In some embodiments, the software upgrade apparatus is a terminal device or a component that runs an OTA master module on a vehicle (or a terminal device). The software upgrade apparatus may send a version query request to a server, and then determine, based on a query result sent by the server for the version query request, whether the version of the target upgrade package is the latest version.

In some embodiments, the software upgrade apparatus is a component that runs an OTA slave module on the vehicle (or the terminal device). The software upgrade apparatus may send the version query request to the component that runs the OTA master module on the vehicle (or the terminal device); and then determine, based on a query result sent by the component that runs the OTA master module for the version query request, whether the version of the target upgrade package is the latest version. The component that runs the OTA master module can determine whether the version of the target upgrade package is the latest version and send a corresponding query result. For example, the component that runs the OTA master module may send a query request to the server to query whether the version of the target upgrade package is the latest version. For another example, the component that runs the OTA master module stores or may obtain information about a latest version of the target software, for example, a version number of the latest version of the target software. With reference to the accompanying drawings, the following describes an example of querying whether the version of the target upgrade package is the latest version.

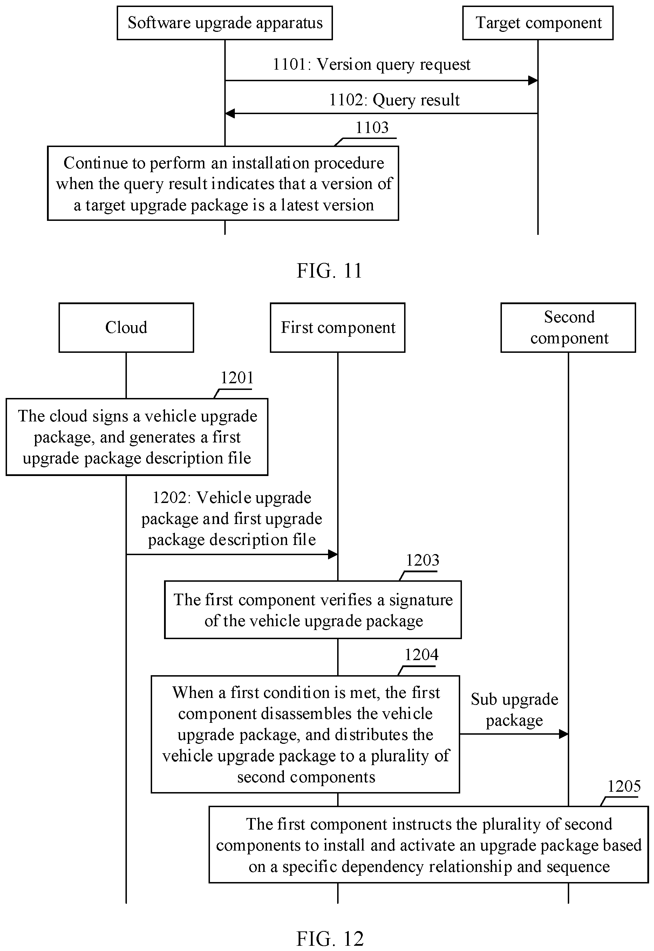

FIG. 11 is a flowchart of another upgrade method according to an embodiment of this application. As shown in FIG. 11, the method includes the following steps.

1101: A software upgrade apparatus sends a version query request to a target component.

The version query request is used to query whether a version of a target upgrade package is a latest version. The software upgrade apparatus is a component that runs an OTA slave module on a vehicle (or a terminal device), and the target component is a component that runs an OTA master module on the vehicle (or the terminal device).

1102: The software upgrade apparatus receives a query result from the target component.

1103: The software upgrade apparatus continues to perform an installation procedure when the query result indicates that the version of the target upgrade package is the latest version.

In a possible implementation, when the query result indicates that the version of the target upgrade package is the latest version, the software upgrade apparatus performs a procedure after the target upgrade package is obtained in the method procedure in FIG. 5, FIG. 7, or FIG. 9.

It should be understood that the software upgrade apparatus stops the installation procedure when the query result indicates that the version of the target upgrade package is not the latest version.

In this embodiment of this application, before upgrading the target software by using the target upgrade package, whether the version of the target upgrade package is the latest version is queried, to resolve a problem that the target software cannot be directly upgraded to a latest version.

The upgrade solution provided in this application is applicable to a software upgrade scenario, for example, a vehicle OTA upgrade scenario or a software upgrade scenario of a terminal device. With reference to the accompanying drawings, the following describes some examples of application of the upgrade solution provided in this application in the vehicle OTA upgrade scenario.

FIG. 12 is an interaction flowchart of an upgrade method according to an embodiment of this application. As shown in FIG. 12, the method includes the following steps.

1201: A cloud signs a vehicle upgrade package, and generates a first upgrade package description file.

For example, the cloud (corresponding to an OTA server) performs digital signature on the vehicle upgrade package. The vehicle upgrade package (corresponding to the foregoing overall upgrade package) may be disassembled to obtain a plurality of upgrade packages used to upgrade components on a vehicle end. The first upgrade package description file includes attribute information of the vehicle upgrade package. The attribute information of the vehicle upgrade package may include a size of the vehicle upgrade package, a quantity of files in the vehicle upgrade package, and one or more hash values corresponding to the vehicle upgrade package, where the one or more hash values are obtained from the vehicle upgrade package.

1202: The cloud delivers the signed vehicle upgrade package and the first upgrade package description file to a first component on the vehicle end.

For example, the cloud (for example, a cloud server) delivers the signed vehicle upgrade package through a TLS channel. The first component (corresponding to the software upgrade apparatus) may be a component that runs an OTA master module on the vehicle end (for example, a vehicle).

1203: The first component verifies a signature of the vehicle upgrade package.

If the signature of the vehicle upgrade package passes verification (namely, the signature of the vehicle upgrade package is correct), step 1304 is performed. If the signature of the vehicle upgrade package does not pass verification, an exception event is recorded.

1204: When a first condition is met, the first component disassembles the vehicle upgrade package, and distributes the vehicle upgrade package to a plurality of second components.

The plurality of second components may be a component that runs an OTA slave module on the vehicle end (for example, a vehicle). For example, the first component disassembles the vehicle upgrade package to obtain five upgrade subpackages, where each upgrade subpackage is used to upgrade one second component that runs the OTA slave module. The first component distributes the five upgrade subpackages to corresponding second components. The first condition (corresponding to the preset condition) may include one or two of the following: attribute information of the vehicle upgrade package matches attribute information of the vehicle upgrade package included in the first upgrade package description file, and a version number of the vehicle upgrade package matches a file included in the vehicle upgrade package. A manner of determining whether the attribute information of the vehicle upgrade package matches the attribute information of the vehicle upgrade package included in the first upgrade package description file may be similar to a manner of determining whether the attribute information of the target upgrade package matches the attribute information of the target upgrade package included in the upgrade package description file, and details are not described herein again. A manner of determining whether the version number of the vehicle upgrade package matches the file included in the vehicle upgrade package may be similar to a manner of determining whether the version number of the target upgrade package matches the file included in the target upgrade package, and details are not described herein again. The first condition may further include: The version number of the vehicle upgrade package is greater than a version number of to-be-upgraded software, or the version number of the vehicle upgrade package is smaller than the version number of the to-be-upgraded software and the version number of the vehicle upgrade package is a version number authorized by a user to install. The to-be-upgraded software is software that is to be upgraded by using the vehicle upgrade package.

In some embodiments, when the first condition is not met, the first component records an exception event.

1205: The first component instructs the plurality of second components to install and activate an upgrade package based on a specific dependency relationship and sequence.

In this embodiment of this application, the first component installs the vehicle upgrade package when the first condition is met, so that an upgrade exception can be reduced.

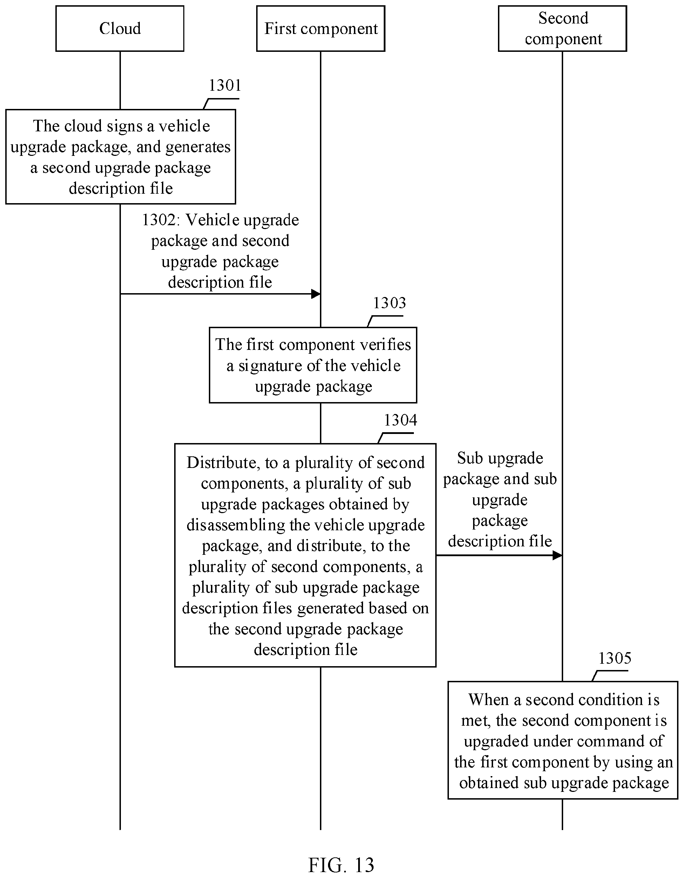

FIG. 13 is an interaction flowchart of another upgrade method according to an embodiment of this application. As shown in FIG. 13, the method includes the following steps.

1301: A cloud signs a vehicle upgrade package, and generates a second upgrade package description file.

The vehicle upgrade package (corresponding to the foregoing overall upgrade package) may be disassembled to obtain a plurality of upgrade subpackages, and each upgrade subpackage is used to upgrade one component on a vehicle end. The second upgrade package description file may include attribute information of the plurality of upgrade subpackages, and the plurality of upgrade subpackages are included in the vehicle upgrade package, that is, the plurality of upgrade subpackages may be obtained by disassembling the vehicle upgrade package. Attribute information of each upgrade subpackage included in the second upgrade package description file may include: a size of the upgrade subpackage, a quantity of files in the upgrade subpackage, and one or more hash values corresponding to the upgrade subpackage, where the one or more hash values are obtained from the upgrade subpackage.

1302: The cloud delivers the signed vehicle upgrade package and the second upgrade package description file to a first component on the vehicle end.

For example, the cloud (for example, a cloud server) delivers the signed vehicle upgrade package through a TLS channel. The first component may be a component that runs an OTA master module on the vehicle end (for example, a vehicle).

1303: The first component verifies a signature of the vehicle upgrade package.

If the signature of the vehicle upgrade package passes verification (namely, the signature of the vehicle upgrade package is correct), step 1304 is performed. If the signature of the vehicle upgrade package does not pass verification, an exception event is recorded.

1304: The first component distributes, to a plurality of second components, the plurality of upgrade subpackages obtained by disassembling the vehicle upgrade package, and distributes, to the plurality of second components, a plurality of upgrade subpackage description files generated based on the second upgrade package description file.

The upgrade subpackage description file includes attribute information of one upgrade subpackage. For example, the first component disassembles the vehicle upgrade package to obtain eight upgrade subpackages, where each upgrade subpackage is used to upgrade one second component that runs an OTA slave module; the first component generates eight upgrade subpackage description files based on the second upgrade package description file, where the eight upgrade subpackage description files are in a one-to-one correspondence with the eight upgrade subpackages; and the first component distributes the eight upgrade subpackages and the eight upgrade subpackage description files to corresponding second components.

In some embodiments, step 1301 in the method procedure in FIG. 13 may be replaced with the following: The cloud signs the vehicle upgrade package, and generates a plurality of upgrade subpackage description files, where each upgrade subpackage description file includes attribute information of one upgrade subpackage. In other words, the plurality of upgrade subpackage description files generated by the cloud correspond to upgrade subpackages included in the vehicle upgrade package. Correspondingly, step 1304 in the method procedure in FIG. 13 may be replaced with the following: The first component distributes, to the plurality of second components, the plurality of upgrade subpackages obtained by disassembling the vehicle upgrade package, and distributes, to the plurality of second components, the plurality of upgrade subpackage description files generated by the cloud.

1305: When a second condition is met, the second component is upgraded under command of the first component by using an obtained upgrade subpackage.

For each second component (corresponding to the software upgrade apparatus), if an upgrade subpackage obtained by the second component meets the second condition, the second component is upgraded by using the upgrade subpackage obtained by the second component. In a possible implementation, when an upgrade subpackage obtained by each second component meets the second condition, each second component feeds back, to the first component, information indicating that the upgrade subpackage obtained by the second component meets the second condition, and installs and activates an upgrade package based on a specific dependency relationship and sequence under command of the first component. It should be understood that, if the upgrade subpackage obtained by each second component meets the second condition, each second component installs and activates the upgrade package based on a specific dependency relationship and sequence under command of the first component. If upgrade subpackages obtained by one or more second components does not meet the second condition, an exception event is recorded.

For each second component, the second condition (corresponding to the preset condition) that needs to be met by the upgrade subpackage obtained by the second component may be one or two of the following: attribute information of the upgrade subpackage matches attribute information of the upgrade subpackage included in the upgrade subpackage description file, and a version number of the upgrade subpackage matches a file included in the upgrade subpackage. A manner of determining whether the attribute information of the upgrade subpackage matches the attribute information of the upgrade subpackage included in the upgrade subpackage description file may be similar to a manner of determining whether the attribute information of the target upgrade package matches the attribute information of the target upgrade package included in the upgrade package description file, and details are not described herein again. A manner of determining whether the version number of the upgrade subpackage matches the files included in the upgrade subpackage may be similar to a manner of determining whether the version number of the target upgrade package matches the files included in the target upgrade package, and details are not described herein again. Any second component may verify, in a manner similar to that of verifying the target upgrade package in FIG. 4 to FIG. 10, an obtained upgrade subpackage.

In some embodiments, the second component may record an exception event when the upgrade subpackage obtained by the second component does not meet the second condition.

In this embodiment of this application, the second component installs the upgrade subpackage when the second condition is met, so that an upgrade exception can be reduced.

The foregoing embodiment describes an example of the method procedure of the upgrade solution provided in this application. With reference to the accompanying drawings, the following describes functions of units in the software upgrade apparatus that implements the upgrade solution provided in this application.

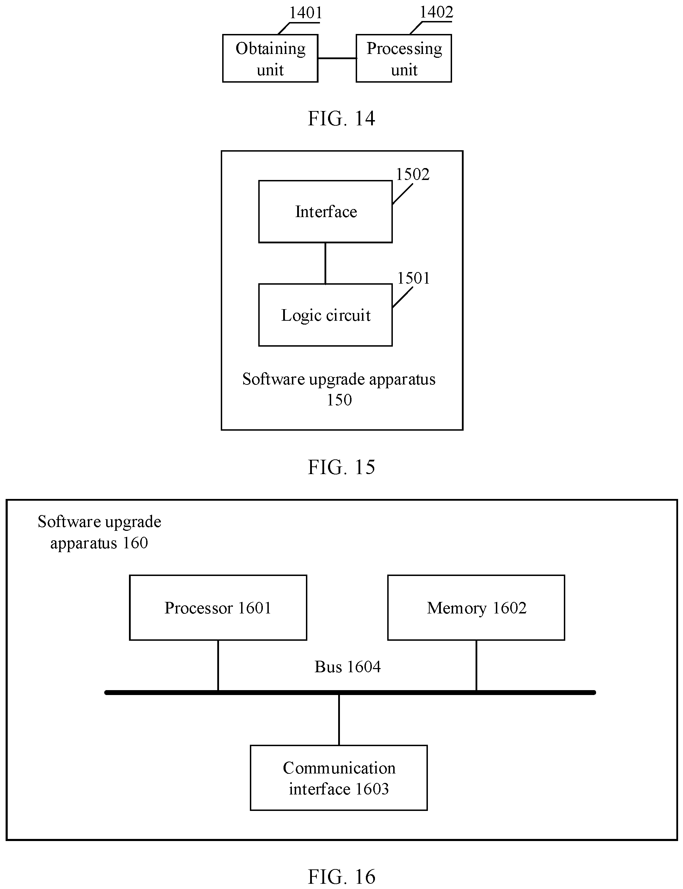

FIG. 14 is a schematic diagram of a structure of a software upgrade apparatus according to an embodiment of this application. As shown in FIG. 14, the software upgrade apparatus includes:
an obtaining unit 1401, configured to obtain a target upgrade package; and
a processing unit 1402, configured to: when a preset condition is met, upgrade target software by using the target upgrade package, where the preset condition is used to verify security of upgrading the target software by using the target upgrade package.

In this embodiment of this application, when the preset condition is met, the processing unit upgrades the target software by using the target upgrade package, so that security of upgrading the target software by using the target upgrade package can be ensured, that is, it can be ensured that an upgrade exception does not occur when the target software is upgraded by using the target upgrade package.

In a possible implementation, the preset condition includes one or two of the following: attribute information of the target upgrade package matches attribute information of the target upgrade package included in an upgrade package description file, and a version number of the target upgrade package matches a file included in the target upgrade package.

In a possible implementation, that the version number of the target upgrade package matches the file included in the target upgrade package includes: a version number of the target software to the version number of the target upgrade package correspond to a major version upgrade, and the target upgrade package includes a file required for implementing the major version upgrade of the target software; or that the version number of the target upgrade package matches the file included in the target upgrade package includes: a version number of the target software to the version number of the target upgrade package correspond to a minor version upgrade, and the target upgrade package does not include the file required for implementing the major version upgrade of the target software.

In a possible implementation, the preset condition further includes: The version number of the target upgrade package is greater than the version number of the target software, or the version number of the target upgrade package is smaller than the version number of the target software and the version number of the target upgrade package is a version number authorized by a user to install.

In a possible implementation, the attribute information of the target upgrade package includes one or more of the following: a size of the target upgrade package, a quantity of files in the target upgrade package, and a hash value, where the hash value is obtained from the target upgrade package.

In a possible implementation, the obtaining unit 1401 is further configured to obtain the upgrade package description file; and the processing unit 1402 is further configured to perform integrity verification on the upgrade package description file. The preset condition includes: The upgrade package description file passes integrity verification, and the attribute information of the target upgrade package matches the attribute information of the target upgrade package included in the upgrade package description file.

In a possible implementation, the processing unit 1402 is further configured to: query whether a version of the target upgrade package is a latest version; and when the version of the target upgrade package is the latest version, perform an operation of upgrading the target software by using the target upgrade package when the preset condition is met.

In a possible implementation, the target software is an electronic map, a target file is a non-dynamic library file, the major version upgrade is an update of a binding map version, the minor version upgrade is an update of a non-binding map version, or the major version upgrade is an update of a base map, and the minor version upgrade is an update of a non-base map.

FIG. 15 is a schematic diagram of a structure of another software upgrade apparatus 150 according to an embodiment of this application. As shown in FIG. 15, the software upgrade apparatus shown in FIG. 15 includes a logic circuit 1501 and an interface 1502. The processing unit in FIG. 14 may be implemented by using the logic circuit 1501, and the obtaining unit in FIG. 14 may be implemented by using the interface 1502. The logic circuit 1501 may be a chip, a processing circuit, an integrated circuit, a system on chip (system on chip, SoC), or the like. The interface 1502 may be a communication interface, an input/output interface, or the like. In this embodiment of this application, the logic circuit may further be coupled to the interface. A specific connection manner of the logical circuit and the interface is not limited in this embodiment of this application. In some embodiments of this application, the logic circuit and the interface may be configured to perform a function, an operation, or the like performed by the foregoing software upgrade apparatus.

FIG. 16 is a schematic diagram of a structure of another software upgrade apparatus 160 according to an embodiment of this application. As shown in FIG. 16, the software upgrade apparatus 160 includes a processor 1601, a memory 1602, and a communication interface 1603. The processor 1601, the memory 1602, and the communication interface 1603 are connected to each other through a bus 1604. The software upgrade apparatus 160 in FIG. 16 may be the software upgrade apparatus in the foregoing embodiments, for example, a mobile phone, a tablet computer, a notebook computer, or a vehicle.

The memory 1602 may be a read only memory (read only memory, ROM), a static storage device, a dynamic storage device, or a random access memory (random access memory, RAM). The memory 1602 may store a program. When the program stored in the memory 1602 is executed by the processor 1601, the processor 1601 and the communication interface 1603 are configured to implement the software upgrade method in embodiments of this application.

The processor 1601 may be a general-purpose central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or transistor logic device, a discrete hardware component, or one or more integrated circuits, and is configured to execute a related program to implement a function that needs to be executed by a unit in the software upgrade apparatus in embodiments of this application, or execute the software upgrade method in the method embodiments of this application. For example, the processor 1601 implements a function of the processing unit 1402.

Alternatively, the processor 1601 may be an integrated circuit chip having a signal processing capability. In an implementation process, the steps of the software upgrade method in this application may be completed through a hardware integrated logic circuit or instructions in a form of software in the processor 1601.

The communication interface 1603 uses a transceiver apparatus, for example, but not limited to, a transceiver, to implement communication between the software upgrade apparatus and another device or a communication network. The communication interface 1603 may implement functions of the obtaining unit 1401. For example, the software upgrade apparatus 160 may obtain an upgrade package through the communication interface 1603.

The bus 1604 may include a path for transmitting information between components (for example, the memory 1602, the processor 1601, and the communication interface 1603) of the software upgrade apparatus 160.

It should be noted that although the software upgrade apparatus shown in FIG. 16 shows only the memory, the processor, and the communication interface, in a specific implementation process, a person skilled in the art should understand that the software upgrade apparatus 160 further includes another component required for implementing normal running. In addition, based on a specific requirement, a person skilled in the art should understand that the apparatus 160 may further include a hardware component for implementing another additional function. In addition, a person skilled in the art should understand that the apparatus 160 may include only components necessary for implementing embodiments of this application, but not necessarily include all the components shown in FIG. 16.

This application further provides a computer-readable storage medium. The computer-readable storage medium stores computer code. When the computer code is run on a processor, the processor is enabled to perform the method in the foregoing embodiments.

This application further provides a computer program product. The computer program product includes computer code or a computer program. When the computer code or the computer program is run on a computer, the method in the foregoing embodiments is performed.

This application further provides a chip. The chip includes a data interface and a processor. The processor is configured to perform the method in any one of the foregoing embodiments. For example, the chip is any chip on which software or firmware is installed on a vehicle.

This application further provides a chip system. The chip system includes at least one processor, configured to support implementation of a function in any one of the foregoing embodiments, for example, receiving or processing data and/or information in the foregoing method.

In a possible design, the chip system further includes a memory. The memory is configured to store program instructions and data. The memory is located inside the processor or outside the processor. The chip system may include a chip, or may include a chip and another discrete component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A software upgrade method, comprising:
obtaining a target upgrade package; and
when a preset condition is met, upgrading target software by using the target upgrade package, wherein the preset condition is used to verify security of upgrading the target software by using the target upgrade package.

2. The method according to claim 1, wherein the preset condition comprises one or two of the following: attribute information of the target upgrade package matches attribute information of the target upgrade package comprised in an upgrade package description file, and a version number of the target upgrade package matches a file comprised in the target upgrade package.

3. The method according to claim 2, wherein
that the version number of the target upgrade package matches the file comprised in the target upgrade package comprises: a version number of the target software to the version number of the target upgrade package correspond to a major version upgrade, and the target upgrade package comprises a file required for implementing the major version upgrade of the target software; or
that the version number of the target upgrade package matches the file comprised in the target upgrade package comprises: a version number of the target software to the version number of the target upgrade package correspond to a minor version upgrade, and the target upgrade package does not comprise a file required for implementing the maj or version upgrade of the target software.

4. The method according to claim 2 or 3, wherein the preset condition further comprises: the version number of the target upgrade package is greater than the version number of the target software, or the version number of the target upgrade package is smaller than the version number of the target software and the version number of the target upgrade package is a version number authorized by a user to install.

5. The method according to any one of claims 2 to 4, wherein the attribute information of the target upgrade package comprises one or more of the following: a size of the target upgrade package, a quantity of files in the target upgrade package, and a hash value, wherein the hash value is obtained from the target upgrade package.

6. The method according to any one of claims 2 to 5, wherein before the upgrading target software by using the target upgrade package, the method further comprises:
obtaining the upgrade package description file, and performing integrity verification on the upgrade package description file, wherein the preset condition comprises: the upgrade package description file passes integrity verification, and the attribute information of the target upgrade package matches the attribute information of the target upgrade package comprised in the upgrade package description file.

7. The method according to any one of claims 1 to 6, wherein before the upgrading target software by using the target upgrade package, the method further comprises:
querying whether a version of the target upgrade package is a latest version; and
when the version of the target upgrade package is the latest version, performing an operation of upgrading the target software by using the target upgrade package when the preset condition is met.

8. The method according to any one of claims 1 to 7, wherein the target software is an electronic map, a target file is a non-dynamic library file, the major version upgrade is an update of a binding map version, and the minor version upgrade is an update of a non-binding map version, or the major version upgrade is an update of a base map, and the minor version upgrade is an update of a non-base map.

9. A software upgrade apparatus, comprising:
an obtaining unit, configured to obtain a target upgrade package; and
a processing unit, configured to: when a preset condition is met, upgrade target software by using the target upgrade package, wherein the preset condition is used to verify security of upgrading the target software by using the target upgrade package.

10. The apparatus according to claim 9, wherein the preset condition comprises one or two of the following: attribute information of the target upgrade package matches attribute information of the target upgrade package comprised in an upgrade package description file, and a version number of the target upgrade package matches a file comprised in the target upgrade package.

11. The apparatus according to claim 9 or 10, wherein that the version number of the target upgrade package matches the file comprised in the target upgrade package comprises: a version number of the target software to the version number of the target upgrade package correspond to a major version upgrade, and the target upgrade package comprises a file required for implementing the major version upgrade of the target software; or
that the version number of the target upgrade package matches the file comprised in the target upgrade package comprises: a version number of the target software to the version number of the target upgrade package correspond to a minor version upgrade, and the target upgrade package does not comprise a file required for implementing the maj or version upgrade of the target software.

12. The apparatus according to claim 10 or 11, wherein the preset condition further comprises: the version number of the target upgrade package is greater than the version number of the target software, or the version number of the target upgrade package is smaller than the version number of the target software and the version number of the target upgrade package is a version number authorized by a user to install.

13. The apparatus according to any one of claims 10 to 12, wherein the attribute information of the target upgrade package comprises one or more of the following: a size of the target upgrade package, a quantity of files in the target upgrade package, and a hash value, wherein the hash value is obtained from the target upgrade package.

14. The apparatus according to any one of claims 10 to 13, wherein
the obtaining unit is further configured to obtain the upgrade package description file; and
the processing unit is further configured to perform integrity verification on the upgrade package description file, wherein the preset condition comprises: the upgrade package description file passes integrity verification, and the attribute information of the target upgrade package matches the attribute information of the target upgrade package comprised in the upgrade package description file.

15. The apparatus according to any one of claims 9 to 14, wherein
the processing unit is further configured to: query whether a version of the target upgrade package is a latest version; and when the version of the target upgrade package is the latest version, perform an operation of upgrading the target software by using the target upgrade package when the preset condition is met.

16. The apparatus according to any one of claims 9 to 15, wherein the target software is an electronic map, a target file is a non-dynamic library file, a first-type version upgrade is an update of a binding map version, and a second-type version upgrade is an update of a non-binding map version, or a first-type version upgrade is an update of a base map, and a second-type version upgrade is an update of a non-base map.

17. A computer-readable storage medium, wherein the computer storage medium stores a computer program, the computer program comprises program instructions, and when the program instructions are executed by a processor, the processor is enabled to perform the method according to any one of claims 1 to 8.

18. A chip, wherein the chip comprises a processor and a data interface, and the processor is configured to perform the method according to any one of claims 1 to 8.
